(19)

Europäisches
Patentamt
European
Patent Office
Office européen
des brevets

(11) **EP 2 747 193 A1**

(12) **EUROPEAN PATENT APPLICATION**

(43) Date of publication:
**25.06.2014 Bulletin 2014/26**

(51) Int Cl.:
*H01Q 1/12* (2006.01)       *H01Q 1/22* (2006.01)
*H01Q 1/24* (2006.01)       *G06K 19/07* (2006.01)

(21) Application number: **12198111.2**

(22) Date of filing: **19.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **BlackBerry Limited**
**Waterloo, ON N2K 0A7 (CA)**

(72) Inventors:
• **Mankowski, Peter**
**Waterloo, Ontario N2L 3W8 (CA)**

• **Geris, Ryan Alexander**
**Waterloo, Ontario N2L 3W8 (CA)**
• **Wu, Xiaowei**
**Waterloo, Ontario N2L 3W8 (CA)**

(74) Representative: **Patel, Binesh**
**Barker Brettell LLP**
**100 Hagley Road**
**Edgbaston**
**Birmingham**
**B16 8QQ (GB)**

(54) **Method and system for antenna alignment**

(57)    Method, device and computer readable memory
aspects describe aligning antennas such as short range
communication antennas in communication devices that
may be used to transmit and receive electrical power for
device charging. A measure of antenna alignment may
be determined in response to electrical power received
by one of the antennas. A suggested movement is determined for moving at least one of the antennas (e.g.
the communication device housing the antenna) for increasing the measure of antenna alignment and the suggested movement is presented in a graphical user inter-
face (GUI). Movement may be suggested along a first
plane to maximize antenna alignment followed by movement along a second plane to further maximize antenna
alignment. A map may be defined from measured antenna alignment values and movement suggested in response to the map. Maximized antenna alignment may
be signalled (e.g. vibration) when the measure of alignment is within a threshold range.

Fig. 4

EP 2 747 193 A1

## Description

## FIELD

The present matter relates to a method and system for aligning an antenna such as a Near Field Communication (NFC) antenna in one NFC capable device with an NFC antenna in another NFC capable device such as for wireless inductive charging.

## BACKGROUND

Short range radio communications between two communication devices (e.g. a first communication device and a second communication device) or a communication device and an non-powered tag may be undertaken by bring the devices into close proximity, such as within a few centimetres, or by touching the devices together. One communication standard for smartphones and similar devices is NFC that operates practically at about 4cm or less. Various applications of such communication include data exchange, contactless transactions, and the setup of more complex communications such as Bluetooth®, Wi-Fi or other functions such as wireless (inductive) charging. NFC communications are initiated by an initiator device generating a radio frequency (RF) field for a target. The RF filed may power the target. Wireless charging systems couple antennas from each device, one device transmitting power and the other receiving the power for charging the device. The physical gap between the two antennas (among other things) may influence the efficiency of the charging. The viable charging area within which the two antennas are to be aligned may be small. The location of an NFC antenna in a device such as a wireless communication device may not be known to a user.

## BRIEF DESCRIPTION OF THE DRAWINGS

In order that the subject matter may be readily understood, embodiments are illustrated by way of examples in the accompanying drawings, in which:

Figures 1 to 3 show an example of first and second mobile wireless communication devices in accordance with a non-limiting example undergoing antenna alignment to activate device to-device communication using Near Field Communications circuits in accordance with a non-limiting example.

Figure 4 is a block diagram illustrating a graphical user interface (GUI) for aligning antennas, the GUI displayed on the first mobile wireless communication in accordance with a non-limiting example;

Figures 5A, 5B and 6 are flowcharts showing operations for antenna alignment in accordance with non-limiting examples; and

Figure 7 is a block diagram of a portable wireless communication device adapted for aligning antennas such as for device-to-device wireless power charging in accordance with a non-limiting example.

For convenience, like numerals in the description refer to like structures in the drawings.

## DETAILED DESCRIPTION

Method, device and computer readable memory aspects describe aligning antennas such as short range communication antennas that may be used to transmit and receive electrical power for device charging. A measure of antenna alignment may be determined in response to electrical power received by one of the antennas. A suggested movement is determined for moving at least one of the antennas (e.g. a device housing the antenna) for increasing the measure of antenna alignment and the suggested movement is presented in a graphical user interface (GUI). In one manner, movement may be suggested along a first plane to maximize antenna alignment followed by movement along a second plane to further maximize antenna alignment. In one manner, a map may be defined from measured antenna alignment values and movement suggested in response to the map. Maximized antenna alignment may be signalled (e.g. vibration) when the measure of alignment is within a threshold range of a maximal value of alignment.

There is provided a computer implemented method of aligning a first antenna with a second antenna for wireless inductive coupling. The method comprises directing movement of a communication device comprising the first antenna in response to a measure of antenna alignment, wherein the directing comprises using a graphical user interface (GUI) of the communication device.

The method may comprise: determining one or more measures of antenna alignment in response to electrical power received from the second antenna via the first antenna; determining a suggested movement for moving at least one of the first antenna and second antenna; and presenting the suggested movement in the GUI.

The method may comprise displaying the measure of antenna alignment in the GUI. The measure of antenna alignment may comprise one or more of a current efficiency value and a current value determined from the electrical power received.

The step of determining a suggested movement may be responsive to the measure of antenna alignment. The method may comprise repeating the steps of determining the measure, determining a suggested movement and presenting the suggested movement to maximize the electrical power received. The repeated steps may operate to suggest movement along a first plane for maximizing the electrical power received. The repeated steps may be operated to suggest movement along a second plane in response to the maximizing of electrical power received as a result of movement along the first plane.

Directing movement comprises defining a map of antenna alignment measures for an area of the communication device and wherein the directing is further responsive to the map to direct the communication device to a maximal antenna alignment position.

The method may comprise signalling when the alignment of the antennas is achieved in accordance with the measure of alignment to stop further movement. Signalling may comprise vibrating the communication device.

The method may comprise first conducting short range communications using the first antenna to initiate the directing to align the antennas. The short range communications may be conducted in accordance with protocols for near field communications (NFC).

The method may further comprise charging a battery using electrical power received via the first antenna.

There is provided a communication device comprising a processor, a memory, a short range communications sub-system and a display. The memory stores instructions and data for configuring the processor to align a first antenna with a second antenna for wireless inductive coupling where the processor is configured to perform the methods described.

Also disclosed are communication device and computer program product (e.g. software components such as instructions and data stored to a memory or other computer readable device for configuring a processor of a computing device) examples.

A rechargeable battery in one device can be charged via wireless inductive coupling using electrical power received wirelessly from another device. Charging involves alignment of an antenna coil in one device transmitting power to an antenna coil in another device receiving the power for charging. Different devices may employ different antennas with different antenna shapes, sizes and locations on the respective devices. Devices may not mark exactly where a coil is located to aid with visually aligning the coil of one device with the coil of another. It is know that antenna alignment significantly helps inductive and thus the efficiency of charging. Changes in antenna alignment have a logarithmic relationship, rather than a linear relationship, to transfer efficiency. Small changes in distance may have a large effect. For example, a best alignment may yield charging at 55% efficiency (e.g. of a theoretical maximum efficiency). A slight misalignment of the antennas can reduce the efficiency to 20%, increasing the amount of time required to charge a battery.

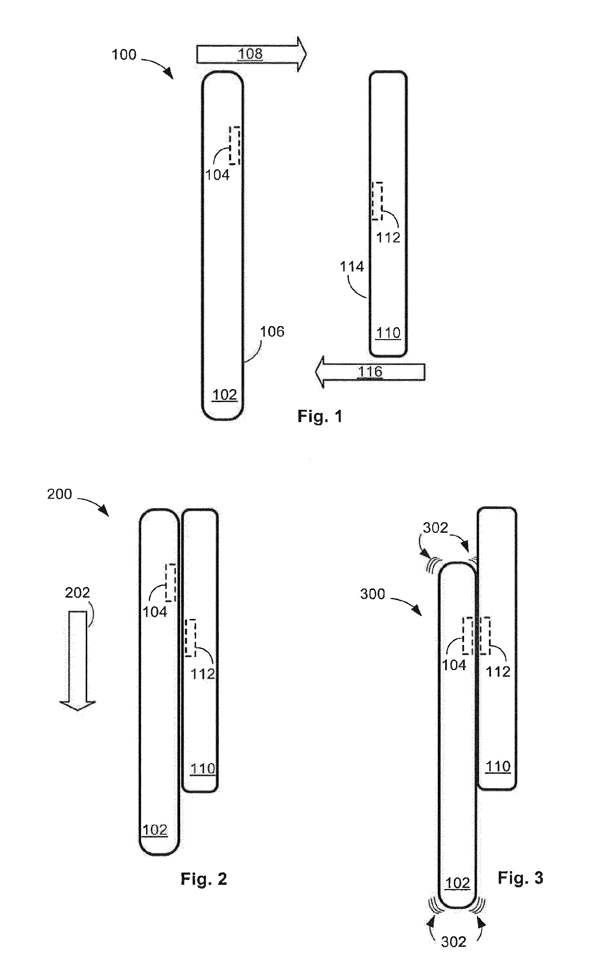

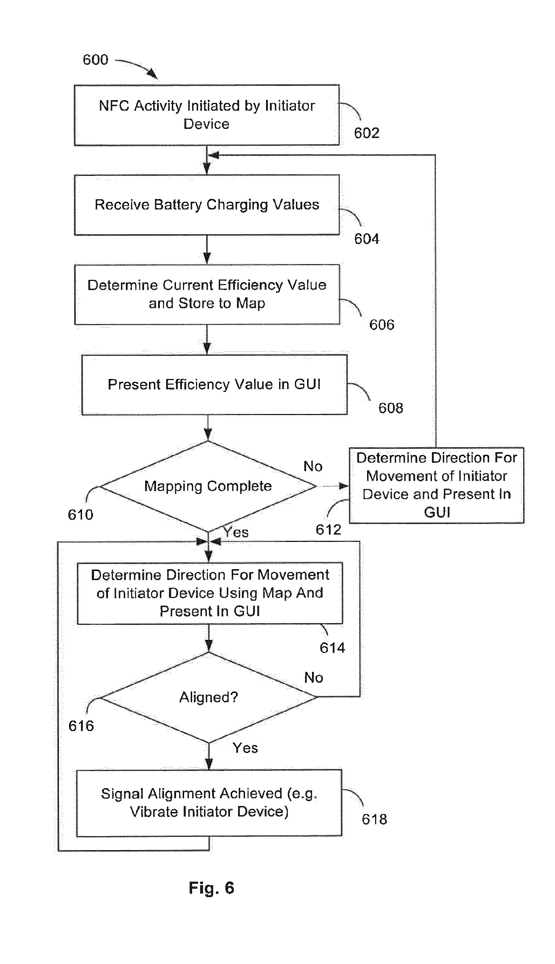

**Figures 1 to 3** show an example of first mobile wireless communication device ("first device") 102 and second mobile wireless communication device ("second device") 110 in a side view 100 in accordance with a non-limiting example undergoing antenna alignment using Near Field Communication circuits (see Figure 6) in accordance with a non-limiting example. First device 102 comprises an NFC antenna 104 near surface 106 and second device 110 comprises an NFC antenna 112 near surface 114. First device 102 is an initiator and second device 110 is a target. Arrows 108 and 116 indicate horizontal motion to bring the first device 102 and second device 110 into closer proximity, at least partially closing the gap between the two NFC antennas 104 and 112. It is understood that one device (e.g. 102) may move and the other (110) may be stationary.

Figure 2 illustrates the first device 102 and second device 110 in a side view 200 in close proximity (adjacency) such that their respective surfaces 106 and 114 are touching. A gap remains between the respective NFC antennas 104 and 112. Arrow 202 indicates vertical movement of first device 102 to align the NFC antennas 104 and 112. Figure 3 illustrates a side view 300 where the first device 102 and second device 110 in alignment and where first device 102 signals alignment such as by vibrating (302). For simplicity in the present illustration of Figures 1 to 3, two dimensional movements in horizontal and vertical planes are shown. It is understood that three dimensional movements may be undertaken to align antennas.

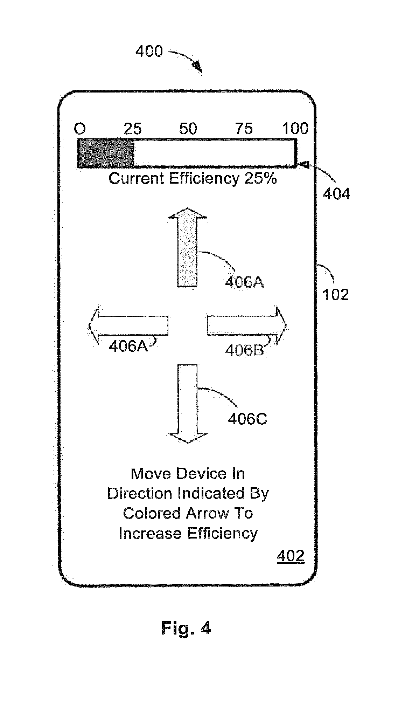

Alignment of the NFC antennas 104 and 112 of the two devices 102 and 110 may be assisted by alignment operations of one of the devices (e.g. 102). For example, first device 102 may be configured with a graphical user interface (GUI) 402 to direct the movement of at least one of the two devices 102 and 110 to align the antennas 104 and 112. Figure 4 illustrates a representative graphical user interface 400. GUI 402 shows a current efficiency representation 404, plurality of direction indicators (collectively 406 and individually 406A, 406B, 406C and 406D) as well as text instructions 408. Current efficiency representation 404 may be in the form of text, graphics, light etc. Direction indicators 406 may be in arrows or other forms. In some examples, only the suggested direction indicator for the next movement may be shown. Direction indicators may be in text form, graphics, etc.

Current efficiency representation may be configured to show the actually power (such as measured by current) transfer efficiency, substantially in real time, for example, as determined in response to the transmitting of electrical power from one device to the other. The efficiency may be represented as a percentage or ratio of a known or theoretical maximum transfer rate. The value of the current received or the value of the current efficiency determined therefrom may be considered a measure of antenna alignment.

Even though first device 102 is an initiator for NFC communications, it may be the recipient of electrical power transmitted from the target for the purposes of charging. That is, first device 102 may initiate NFC communications with second device 110 but such NFC communication may be used to initiate the power charging of first device 102 by second device 110. Though not shown, either or both devices may be configured with GUI options to initiate charging, for example, to receive power to charge the device or to transmit power to charge another device. The GUI options may be invoked automatically such as in response to NFC communication initiation with another device. The GUI options may include operations for controlling how much power is received by the device when charging (e.g. as a percentage of the battery charge, such as 25% added) to automatically stop charging or controlling how much power is transmitted (e.g. as a percentage of the battery charge, such as 25% depleted) to automatically stop discharging. By way of a practical but non-limiting example, a user may have a tablet device having a 50% battery charge and a smartphone device having a 2% battery charge. The user may desire to make a telephone call and determine that the battery charge is insufficient on the smartphone. The user may position the smartphone and tablet in close proximity such that the two devices initiate NFC communication. The charging GUI on the tablet, for example, may be invoked and provide operations to choose how much of the tablet's battery charge is to be used to charge the smartphone. For example, the GUI may provide options for receiving power (e.g. "Charge device?") or transmitting power (e.g. "Charge another device?"). The charge another device option may be invoked. The tablet GUI may further include options for configuring a portion of the battery charge is to be used, all of the charge is to be used or simply to initiate charging operations. The charging GUI on the smartphone, for example, may be invoked. For example, the smartphone GUI may provide options to receive power (e.g. "Charge device?") or transmit power (e.g. "Charge another device?"). The charge device option may be invoked to charge the smartphone. The smartphone GUI may provide operations to choose how much power is to be received or simply to initiate charging operations, for example, so that the tablet may control the charging or so that charging will terminate when the battery is fully charged or the devices are separated.

With a view to increasing the current efficiency (e.g. in response to the current efficiency being less than a desired value or range of desired values such as being less than 100% minus a threshold value), a suggested direction to move first device 102 may be indicated via GUI 400. For example one of direction indicators 406 (e.g. 406A) may be highlighted to indicate the suggested direction. Current efficiency may be determined again (e.g. periodically) to update GUI 400 such as to update the current efficiency representation 404 and/or to update the direction indicator.

In one example, a "trial and error" or "directed hunt" approach to increasing antenna alignment (e.g. current efficiency) may be guided by GUI 400 to direct movement of at least one of the antennas of the first device and second device. It will be understood that the NFC antennas are usually fixed within such devices and that movement of the devices moves the antenna.

The trial and error/directed hunt approach guides movement along a first plane for increasing antenna alignment and when a maximal alignment is achieved, guides movement along a second plane for increasing antenna alignment. The approach seeks to increase the actual current efficiency to a value approaching 100%. Typically less than 100% efficiency is tolerable. For example, a desired current efficiency (DCE) is:

$$\text{Threshold } \% \le \text{DCE} \le 100\%.$$

Rather than employing a ratio to indicate current efficiency per se, a measure of the current alone or other similar electrical power measure may be used as the measure of antenna alignment. For example, assume that the theoretical maximum power transfer is X watts and the actual (measured) power transfer is Y watts. The ratio $Y/X * 100$ may represent the current efficiency as a percentage. The operations of the GUI to guide movement of the devices may use the ratio or the current measure or another measure.

In the trial and error/directed hunt approach, operations may determine a measure of antenna alignment (e.g. current efficiency value) and if it is not within the threshold range, suggest a movement in a direction along a first plane such as a vertical plane, repeating the determination and movement suggestion via the GUI to achieve a maximal antenna alignment for movements along that plane. The antenna alignment may remain less than the threshold range, for example because the antenna is misaligned along a perpendicular plane (horizontal). The GUI can then direct movement along the second plane to seek to increase alignment. Should the measure of alignment decrease as the device is moved in a direction along the plane, the GUI can suggest reversing the direction along the same plane to move back toward the maximal alignment value. Once this is measured, the switch to the second plane may be undertaken. To smooth operations, measures of antenna alignment may be rounded or otherwise reviewed so as to provide suitable tolerances when comparing successful measures or calculated values. Thus maximal alignment is not absolute but about maximal for example within a few % thereof.

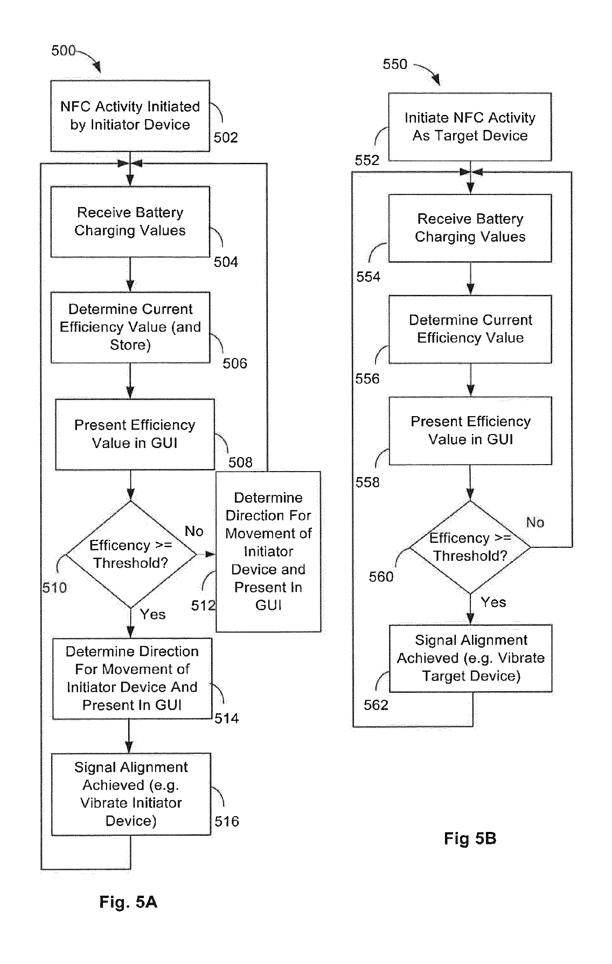

In one example, when operations to align antennas are initiated, a first current efficiency value may be determined and a first direction may be suggested. A subsequent current efficiency value is determined for assessing the improvement or not in the current efficiency, if any. A tolerance may be applied when assessing. If the subsequent current efficiency value is more than the first current efficient value (plus the tolerance) but still not in the range of ideal values, the direction indicator may be maintained to suggest further movement in the same direction. If less than the first (prior) current efficiency value plus the tolerance, an opposite direction indicator may be highlighted to move the first device 102 back to a prior position to regain the higher current efficiency. Once the current efficiency is maximized using suggested movement along one plane, movement along the other plane may be suggested to seek to achieve the currency efficiency value to be within the threshold range of 100%. If the threshold range is achieved, the first device may signal alignment so as to stop further movement. Signaling may take various forms such as by vibrating the device, making a sound, flashing a light, etc. Alignment operations using a "trial and error" approach are described further with reference to Figure 5A, for example.

In another example approach, operations may be configured to map the current efficiency in an area, directing the movement of at least one of the devices via the GUI such as to paint an area of the device while measuring the current efficiency, determine the maximal efficiency representing the desired alignment in the area using the map and direct the movement of the devices to the desired alignment using the GUI. Mapping operations are described further with reference to Figure 6.

**Figures 5A and 5B** are flowcharts of operations 500 and 550 of an initiator (e.g. first device 102) and a target (e.g. second device 110) respectively for aligning antennas in accordance with an example, where first device 102 initiates the NFC communication and receives electrical power from second device 110. It is understood that in other example configurations NFC communication may be initiated by second device 110 and electrical power transferred to first device 102 or vice versa.

In some example configurations (not shown), a choice option may appear (e.g. on either or each display of respective device 102, 110) once NFC communications are initiated to permit choice of which device transmits electrical power and which receives electrical power. The choice received on one device can be communicated to the other device using NFC communication to coordinate the power charging.

At 502 NFC communication is initiated by first device 102 (an initiator device) for communicating with second device 110. Though not shown, the initiation of the NFC communications may invoke a GUI change to the first device 102 for example, to prompt whether power charging of the first device is to be initiated. A positive response may be received to initiate power charging which in turn may invoke antenna alignment operations 504 and following.

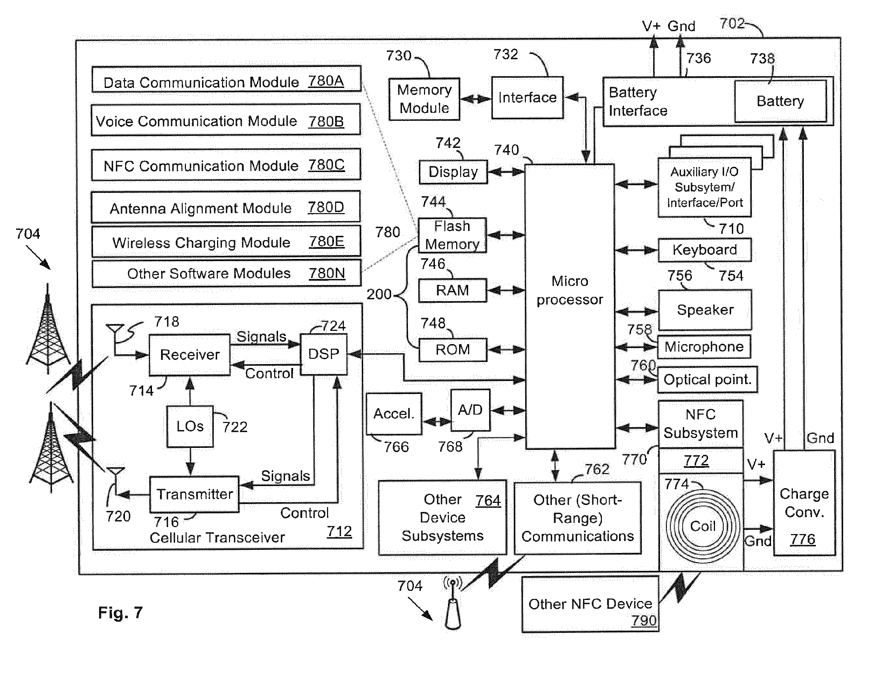

At 504, first device 102 examines battery charging values such as may be received from a battery interface, NFC antenna signal values such as received electrical power (current) values using one or more sensors, or other measuring devices, etc. coupled to the NFC antenna circuits or battery charging components of the first device 102 (See Fig. 7). A present current efficiency value is calculated 506 (e.g. for presentation by GUI 402). The present current value or current efficiency value may be stored for comparing to subsequent determinations of such as to assist with determining a suggested direction of movement. The present current and/or current efficiency value is presented in GUI 402 (508). At 510, responsive to either present current and/or current efficiency value and, in particular, whether either present current and/or current efficiency value is within the ideal range or not, a suggested direction of movement is determined and presented (512) in the GUI 402.

Via no branch from determination 510, as the desired efficiency is not achieved, movement of the first device 102 is indicated and a suggested direction may be made 512 and presented in the GUI 402. The present current or efficiency value may be compared to a prior current and/or current efficiency value to determine whether efficiency is improving or not to drive the choice of which direction should be suggested such as at operation 512. Operations may continue from 512 at 504 to iterate subsequent measurements and movements. It is understood that measurements, GUI updates and suggested directions may be undertaken periodically so as not to overload the first device or provide too many suggested movements to a user. Though described with reference to movement of first device 102, movement of second device 110 may be undertaken with a view to aligning the antennas. It may be simpler in practice to move one or the other of first device 102 and second device 110.

At 510, it may be determined that a desired efficiency is achieved. Via yes branch at 510 to operation 514, as the desired current and/or current efficiency value is within the range, no further movement is indicated and the suggested direction may be updated in the GUI 402 to indicate no movement. At 516, achievement of desired alignment may be signaled such as by vibrating the initiator device. Optionally operations may continue at 504 to account for movement during charging for example.

**Figure 5B** shows a flowchart of operations 550 of second device 110 (a target for NFC communication) in accordance with a non-limiting example. In the example, second device 110 transmits electrical power to first device 102. Second device 110 may present a similar GUI as first device 102. Operations for determining whether the device is to receive or transmit and other charge control operations such as how much batter charge is to be used are omitted. To reduce movement of both devices, in the present example, the GUI of second device 110 does not indicate suggested movements. In other examples, no antenna alignment GUI may be used for second device 110 and antenna alignment operations (e.g. 554 and following) may be omitted.

At 552, NFC communications are initiated as a target device. In one example (not shown), a GUI may be triggered and used to invite power charging of NFC coupled first device 102 to further antenna alignment operations (e.g. 554 and following).

At 554, second device 110 examines NFC antenna signal values such as received electrical power (current) values using one or more sensors, or other measuring devices, etc. coupled to the antenna circuits of the second device 110 (See Fig. 7). A present current efficiency value is calculated 556 (e.g. for presentation 558 by a GUI (not shown)). At 560, responsive to either present current and/or current efficiency value and, in particular, whether either present current and/or current efficiency value is within the ideal range or not, operations may branch accordingly.

Via no branch from determination 560, as the desired efficiency is not achieved, movement of the first device 102 is indicated and operations 550 may continue from 554 to iterate subsequent measurements. It is understood that measurements and GUI updates may be undertaken periodically so as not to overload the second device 110.

At 560, it may be determined that a desired efficiency is achieved. Via yes branch at 560 to operation 562, as the desired value is within the range, no further movement is indicated and the suggested direction may be updated in the GUI 402 to indicate no movement. At 562, achievement of desired alignment may be signaled such as by vibrating the initiator device. Optionally operations may continue at 554 to account for movement during charging for example.

**Figure 6** is flowchart of operations 600 for execution by an initiator (e.g. first device 102) in accordance with a non-limiting example employing a mapping approach for aligning antennas, where first device 102 initiates the NFC communication and receives electrical power from second device 110. It is understood that in other example configurations NFC communication may be initiated by second device 110 and electrical power transferred to first device 102 or vice versa. In some example configurations (not shown), a choice option may appear (e.g. on either or each display of respective device 102, 110) once NFC communications are initiated to permit choice of which device transmits electrical power and which receives electrical power. The choice received on one device can be communicated to the other device using NFC communication to coordinate the power charging.

At 602 NFC communication is initiated by first device 102 (an initiator device) for communicating with second device 110. Operations direct the mapping of the current values or current efficiency values, or other measure of antenna alignment such as by painting an area of first device 102 (e.g. steps 604, 606, 608, 610 and 612). Operations then direct the movement of the first device 102 to the maximal antenna alignment measure (or within a threshold thereof) using the map and GUI (steps 614, 616 and 618).

At 604, battery charging signals are received. A present current efficiency value is calculated 606 (e.g. for presentation by GUI 402). The present current value or current efficiency value may be stored for comparing to subsequent determinations of such as to assist with determining a suggested direction of movement. The present current and/or current efficiency value is presented in GUI 402 (608). At 610, a determination is made whether the mapping is complete or not. If not, via no branch from 610 a suggested direction of movement is determined and presented (612) in the GUI 402. The arrows may be highlighted. The user is directed to make slow, small movements to map the area.

The present current or efficiency value may be compared to a prior current and/or current efficiency value to determine whether efficiency is improving or not to drive the choice of which direction should be suggested such as at operation 612. Operations may continue from 612 at 604 to iterate subsequent measurements and movements. It is understood that measurements, GUI updates and suggested directions may be undertaken periodically so as not to overload the first device or provide too many suggested movements to a user. Though described with reference to movement of first device 102, movement of second device 110 may be undertaken with a view to aligning the antennas. It may be simpler in practice to move one or the other of first device 102 and second device 110.

At 610, it may be determined that the mapping is complete. Via yes branch at 610 to operation 614, the GUI is updated to direct movement of the device using the map to move the antenna into a maximal antenna alignment position (e.g. as determined from the map). A threshold may be used (e.g. a small amount + or - the maximal measure of antenna alignment efficiency) when determining if the device is in position. A determination is made at 616 whether the device is in the desired position (e.g. is aligned). If no, operations return to step 614. If yes, operations signal alignment such as by vibrating the device (618). Alignment movement operations may repeat at 614 from 618 for example, to address movement during charging.

**Figure 7** is a block diagram of a portable wireless communication device 702 configured for aligning antennas such as for device-to-device wireless power charging, in accordance with a non-limiting example. Device 702 is suitable to be configured as portable wireless communication device 102 and/or 110. Device 702 is illustrated with wireless communication capabilities and, in this particular example, communicates through a communication network 704 which may be a cellular network or a Wi-Fi network. Network 704 may comprise antenna, base stations, and other supporting radio equipment (not shown) for supporting wireless communications between device 702 and other devices connected to network 704. Network 704 may be connected to a network gateway and to a wide area network (not shown). As further described, device 702 is also configured for short range communication such as NFC communication with another short range capable device or tag.

In one example embodiment, device 702 is a two-way communication device having at least data and/or voice communication capabilities, including the capability to communicate with other computer systems. In particular example embodiments, device 702 is a mobile device. Depending on the functionality provided by device 702, it may be a data messaging device, a two-way pager, a cellular telephone with data messaging capabilities, a wireless Internet appliance, a data communication device (with or without telephony capabilities), a smartphone, personal digital assistant, a portable media, a music player, a tablet or a laptop. Though the embodiments herein are primarily described with reference to a portable wireless communication device 702, the teachings herein may be practiced in some configurations using a desktop computer or other computing device. Though a wireless device is shown, in some examples, device 702 may have a wired connection to a network.

Device 702 may incorporate one or more communication subsystems such as subsystem 712 and/or 762. Communication subsystem 762 may be a wireless networking communications subsystem, for example, conforming to IEEE 802.71 standards such as 802.71 b, 802.71 g, and/or 802.71n and/or others. In some example embodiments, subsystem 762 is only present and communications subsystem 712 providing cellular communications is not. In some example embodiments, communications subsystem 712 may be removably connected to a port of device 702 such as via a USB stick. In an example, communication subsystem 712 includes a receiver 714, a transmitter 716, and associated components, such as one or more antenna elements (718 and 720), local oscillators (LOs) 722, and a processing module such as a digital signal processor (DSP) 724. In one example embodiment, antenna elements (718 and 720) may be embedded or internal to device 702. As will be apparent to those skilled in the field of communications, the particular design of the communication subsystem 712 depends on the network 704 in which device 702 is intended to operate.

Device 702 may send and receive communication signals over the network 704 after network registration or activation procedures have been completed. Signals received (e.g. by antenna elements 718) through network 704 are input to receiver 714, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in DSP 724. In a similar manner, signals to be transmitted are processed, including modulation and encoding, for example, by DSP 724. These DSP-processed signals are input to transmitter 716 for digital-to-analog (D/A) conversion, frequency up conversion, filtering, amplification, and transmission to the network 704 via antenna 720. DSP 724 processes communication signals and provides for receiver and transmitter control. For example, the gains applied to communication signals in receiver 714 and transmitter 716 may be adaptively controlled through automatic gain control algorithms implemented in DSP 724.

Network access (WAN) may be associated with a subscriber or user of device 702 via a memory module, such as a memory module 730, which may be a Subscriber Identity Module (SIM) card for use in a GSM network or a USIM card for use in a UMTS. The SIM card is inserted in or connected to an interface 732 of device 702 in order to operate in conjunction with network 704. Alternatively, device 702 may have an integrated identity module for use with systems such as Code Division Multiple Access (CDMA) systems. Device 702 may include a Wi-Fi transceiver as part of other (short range) communication subsystem 780 that may include similar components/chipsets to communication subsystem 712 adapted for one or more Wi-Fi protocols. Though Wi-Fi is shown, WiMAX is one alternative transceiver. In some examples, device 702 may be capable of Wi-Fi and WiMAX communications in accordance with software-defined radio ("cognizant radio") techniques. Device 702 may also include GPS capabilities through one or more of its antenna.

Device 702 also includes a battery interface 736 for receiving one or more battery 738 which may be rechargeable. The one or more battery 738 provides electrical power to at least some of the electrical circuitry in device 702, and battery interface 736 provides a mechanical and electrical connection for the one or more battery 738. Battery interface 736 is connected to a regulator (not shown) which provides power V+ to the circuitry of device 702. Battery 738 may be charged via NFC antenna subsystem 770 and charge converter 776.

Device 702 includes a programmable processor (e.g. microprocessor 740) which controls the overall operation of device 702. Communication functions, including at least data and voice communications, are performed through the communication subsystem 712. Microprocessor 740 also interacts with additional device subsystems such as a display 742, a flash memory 744, a random access memory (e.g. RAM 746), a read-only memory (e.g. ROM 748), input/output (I/O) subsystems, interfaces or ports 710 (e.g. an audio port for connecting to a set of headphones and/or a remote microphone, an High-Definition Multimedia Interface (HDMI), composite video, component video, S-Video, etc, a Universal Serial Bus (USB) or Ethernet port), a keyboard or keypad 754, a speaker 756, a microphone 758, a clickable thumbwheel, trackball, optical or other touch or gesture based input pad, or set of scroll buttons, etc. 760, typically for scrolling/selecting input, one or more short-range communications subsystems 762, and any other device subsystems generally designated as 764. Keypad 754 may be either a complete alphanumeric keypad or telephone-type keypad. Some of the subsystems shown in FIG. 7 perform communication-related functions, whereas other subsystems may provide "resident" or on-device functions.

Some subsystems, such as keypad 754, display 742, and input device 760, for example, may be used for communication-related functions, such as entering a text message for transmission over network 704, and executing device-resident functions such as a calculator or task list, media play back, Internet browsing, etc. Operating system software and other software (typically comprising instructions and/or data such as in one or more modules and/or applications (collectively 780)) used by the microprocessor 740 is preferably stored in a persistent store such as flash memory 744, which may alternatively be ROM 748 or similar storage element. Those skilled in the art will appreciate that the operating system, specific device applications, or parts thereof, may be temporarily loaded into a volatile store such as RAM 746.

Microprocessor 740, in addition to its operating system functions, enables execution of software applications on device 702. A predetermined set of applications that control basic device operations, including data and voice communication applications (e.g. 780A and 780B), will normally be installed on device 702 during or after manufacture. One or more memory stores may be available on device 702 to facilitate storage of information, such as flash memory 744, RAM 746, ROM 748, memory module 730, or other types of memory storage devices or FLASH memory cards represented by other device subsystems 764, such as Secure Digital (SD) cards, mini SD cards, micro SD cards, etc.

Device 702 may be configured with a browser (e.g. one of the other software modules 780N) for interacting with Web pages. Device 702 may have one or more media related applications (e.g. 780N) for displaying images, playing audio and or video files/streams, etc. The browser and/or media applications often have the ability to send and receive data items via either network 704 or a link to a computer system. The link to the computer system may be via serial port (e.g. 710) or short-range communications subsystem 762. Additional applications may also be loaded onto device 702 through network 704, auxiliary I/O subsystems/interfaces/ports 710, short-range communications subsystem 762, or possibly, other device subsystems 764, and installed by a user in RAM 746 or a non-volatile store such as ROM 748 for execution by microprocessor 740. NFC communication module 780C may be useful for short range communications using NFC antenna subsystem 770 comprising various circuitry (e.g. a chip) 772 and NFC antenna 774 which typically compromises a coil. Such flexibility in application installation increases the functionality of device 702 and may provide enhanced on-device functions, communication-related functions, or both. For example, secure communication applications may enable electronic commerce functions and other such financial transactions to be performed using device 702.

A serial port (e.g. 710) is often implemented (e.g. in a personal digital assistant (PDA) type communication device for which synchronization or other communication with a user's computer is a useful, but optional, component). A serial port enables a user to set preferences through an external device or software application and extends the capabilities of device 702 by providing for information, media file, or software downloads to or uploads from device 702 other than through network 704. It may also accept other communication devices such as radio and IR dongles.

Short-range communications subsystem 762 and/or NFC antenna subsystem 770 are additional components which provide for communication between device 702 and different systems or devices, which need not necessarily be similar devices. For example, short-range communications subsystem 762 may include an infrared (IR) device and associated circuits and components, or a wireless bus protocol compliant communication mechanism such as a Bluetooth communication module to provide for communication with similarly-enabled systems and devices. Device 702 may be configured to pair with other Bluetooth compliant devices for establishing communications.

In accordance with an example, device 702 may be configured with an antenna alignment module 780D to assisting with the alignment of NFC antenna 774 with an NFC antenna (not shown) of another device 790. Antenna alignment module 780D may be separate from or part of a wireless charging module 780E for controlling the charging of battery 738 via battery interface 736 from power received via NFC antenna 774. Antenna alignment module 780D may be configured to operate as described with reference to Figures 4 to 6 in accordance with respective configurations thereof.

While communication device to communication device charging and alignment have been discussed where both devices are voice and/or data communication devices and are configured for wireless inductive charging, other device configurations may be envisioned. For example, in one non-limiting example, communication device 102 may be configured to align antennas (coils) with a simplified wireless inductive charging unit which is not configured as a voice and/or data communication device per se. The wireless inductive charging unit may comprise a connector to a power source such as an AC source, a regulator and other components for controlling the power and a coil for providing charging power via wireless inductive. First device 102 may be configured to direct movement to align with the wireless inductive charging unit. The wireless inductive charging unit may be configured to comprise a rechargeable battery and/or to provide a wired power output (e.g. via USB cable or other cable) to another device. First device 102 may be operated to align with the wireless inductive charging unit and provide power to the wireless inductive charging unit, for example, to charge the rechargeable battery and/or to provide power via the wired power output of the wireless inductive charging unit. In such a manner, the first device may be used, via the wireless inductive charging unit, to charge another device that is not capable of wireless inductive charging. In addition to charging as described, the power transferred from one device to the other can be used to power the receiving device.

Though described with reference to maximizing antenna alignment, it is understood that operations may be configured to stop directing movement of the device (antenna) when the measure of alignment is less than a mathematical maximum. For example, through testing of device to device wireless induction, it may be determined that efficiency beyond X% of an ideal transfer value cannot be achieved. This may be because the respective coils that are in the device housings cannot be brought any closer together or on account of the shape or relative size of the coils. This practical value (X% of ideal) may represent the maximal antenna alignment. Operations may be configured to seek alignment below this maximum (e.g. within a few percent or other tolerance threshold) in a relaxed manner, for example, so as not to frustrate users.

One or more embodiments have been described by way of example. It will be apparent to persons skilled in the art that a number of variations and modifications can be made. The scope of the claims should not be limited by the embodiments set forth in the examples, but should be given the broadest interpretation consistent with the description as a whole.

## Claims

1. A computer implemented method of aligning a first antenna (104) with a second antenna (112) for wireless inductive coupling, the method comprising:

   directing movement (500, 600) of a communication device (102, 110, 702, 790) comprising the first antenna in response to a measure of antenna alignment,
   wherein the directing comprises using a graphical user interface (GUI) (400) of the communication device.

2. The method of claim 1 comprising:

   determining one or more measures of antenna alignment (506, 606) in response to electrical power received (504, 604) from the second antenna via the first antenna;
   determining a suggested movement ((512, 514), (612, 614)) for moving at least one of the first antenna and second antenna; and
   presenting the suggested movement ((512, 514), (612, 614)) in the GUI.

3. The method of claim 2 comprising displaying the measure of antenna alignment (508, 608) in the GUI.

4. The method of claim 3 wherein the measure of antenna alignment comprises one or more of a current efficiency value and a current value determined from the electrical power received.

5. The method of any one of claims 2 to 4 wherein the step of determining a suggested movement is responsive to the measure of antenna alignment (510, 610).

6. The method of claim 5 comprising repeating the steps of determining the measure, determining a suggested movement and presenting the suggested movement to maximise the electrical power received.

7. The method of claim 6 wherein the repeated steps operate to suggest movement along a first plane for maximizing the electrical power received (504-514).

8. The method of claim 7 wherein said repeated steps are operated to suggest movement along a second plane in response to the maximizing of electrical power received as a result of movement along the first plane.

9. The method of claim 1 wherein directing movement comprises defining a map (604-612) of antenna alignment measures for an area of the communication device and wherein the directing is further responsive to the map (614-618) to direct the communication device to a maximal antenna alignment position.

10. The method of any one of claims 1 to 9 comprising signalling when the alignment of the antennas is achieved ((510, 514, 516,) (614-618)) in accordance with the measure of alignment to stop further movement.

11. The method of any one of claims 1 to 10 comprising first conducting short range communications using the first antenna (502, 602) to initiate the directing to align the antennas.

12. The method of claim 11 wherein the short range communications are conducted in accordance with protocols for near field communications (NFC).

13. The method of any one of claims 1 to 12 further comprising charging a battery using electrical power received via the first antenna.

14. A communication device (102, 110, 702) comprising a processor (740), a memory (744, 746, 748) and a short range communications sub-system (770) and a display (742), the memory storing instructions and data for configuring the processor to align a first antenna with a second antenna for wireless inductive coupling, the processor configured to perform a method in accordance with any one of claims 1 to 13.

15. A computer readable memory (744, 746, 748) having recorded thereon instructions for configuring a processor (740) of a communication device (102, 110, 702) in accordance with claim 14 to perform a method in accordance with any one of claims 1 to 13.

100

108 →

104

106

102

**Fig. 1**

108

116 ←

112

114

110

200

202 ↓

104

112

110

102

**Fig. 2**

302

300

104 112

110

102 **Fig. 3**

302

400

Current Efficiency 25%

404

406A

102

406A  406B

406C

Move Device In
Direction Indicated By
Colored Arrow To
Increase Efficiency

402

Fig. 4

500

NFC Activity Initiated by Initiator Device
502

Receive Battery Charging Values
504

Determine Current Efficiency Value (and Store)
506

Present Efficiency Value in GUI
508

Efficency >= Threshold?
510

No → Determine Direction For Movement of Initiator Device and Present In GUI
512

Yes

Determine Direction For Movement of Initiator Device And Present In GUI
514

Signal Alignment Achieved (e.g. Vibrate Initiator Device)
516

Fig. 5A

550

Initiate NFC Activity As Target Device
552

Receive Battery Charging Values
554

Determine Current Efficiency Value
556

Present Efficiency Value in GUI
558

Efficency >= Threshold?
560

No

Yes

Signal Alignment Achieved (e.g. Vibrate Target Device)
562

Fig 5B

Fig. 6

Fig. 7

Europäisches
Patentamt

European
Patent Office

Office européen
des brevets

## EUROPEAN SEARCH REPORT

**Application Number**

EP 12 19 8111

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/296978 A1 (FINKENZELLER KLAUS [DE] ET AL) 4 December 2008 (2008-12-04) * the whole document * ----- | 1-15 | INV. H01Q1/12 H01Q1/22 H01Q1/24 G06K19/07 |
| X | WO 2008/039559 A1 (SONY ERICSSON MOBILE COMM AB [SE]; JOHNSON PHILLIP MARC [US]; BLOEBAUM) 3 April 2008 (2008-04-03) * the whole document * ----- | 1-12,14, 15 | |
| X | US 2009/321510 A1 (DAY PHILIP N [GB] ET AL) 31 December 2009 (2009-12-31) * paragraph [0073] - paragraph [0078] * ----- | 1-12,14, 15 | |

**TECHNICAL FIELDS SEARCHED (IPC)**

H01Q
G06K

The present search report has been drawn up for all claims

| Place of search | Date of completion of the search | Examiner |
|---|---|---|
| The Hague | 4 June 2013 | Moumen, Abderrahim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                               

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 19 8111

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2013

| Patent document cited in search report | | Publication date | Patent family member(s) | | Publication date |
|---|---|---|---|---|---|
| US 2008296978 | A1 | 04-12-2008 | EP 1782330 A1 | | 09-05-2007 |
| | | | US 2008296978 A1 | | 04-12-2008 |
| | | | WO 2006018231 A1 | | 23-02-2006 |
| WO 2008039559 | A1 | 03-04-2008 | CN 101517915 A | | 26-08-2009 |
| | | | EP 2080280 A1 | | 22-07-2009 |
| | | | US 2008093447 A1 | | 24-04-2008 |
| | | | WO 2008039559 A1 | | 03-04-2008 |
| US 2009321510 | A1 | 31-12-2009 | NONE | | |

EPO FORM P0459

For more details about this annex : see Official Journal of the European Patent Office, No. 12/82